# EUROPEAN PATENT APPLICATION

(11) **EP 1 338 881 A1**
(43) Date of publication of application: **27.08.2003**
(21) Application number: 02003934.3
(22) Date of filing: 21.02.2002
(51) Int. Cl.: G01M 9/04, G01M 17/007, G01M 15/00

(54) **Chassis dynamometer for testing a vehicle in a wind tunnel**

(71) Applicant: EUROPEAN COMMUNITY, 1049 Brussels (BE)
(72) Inventor: Tsotridis, Georgios, 1816 Alkmaar KH (NL)
(74) Representative: Schmitt, Armand

(57) **Abstract**

A chassis dynamometer (10) for testing a vehicle (12) in a wind tunnel (44) comprises a supporting frame (16) and at least one roller assembly (20, 22) with at least one roller (24, 24', 26, 26'). The latter is rotatably mounted on the supporting frame (16) for engaging at least one driving wheel of the vehicle (12). In accordance with an important aspect of the present invention, a road simulating moving belt (38) extends between the wheels of the vehicle (12) at least from the front end of the vehicle (12) to the rear end of the vehicle (12).

## Description

### Field of the invention

The present invention relates to a chassis dynamometer for testing a vehicle in a wind tunnel.

### Background of the invention

In order to measure e.g. fuel consumption, exhaust emissions or engine performance of a vehicle, it is common practice to subject the vehicle to actual road condition tests using a chassis dynamometer. The latter simulates, to some extent, actual road conditions to which a vehicle is subjected in operation. Furthermore, such a chassis dynamometer is generally disposed in a wind tunnel for simulating air flowing around the vehicle.

In general, chassis dynamometers employed in such tests comprise rollers, which are rotatably mounted on a supporting frame for engaging the wheels of the vehicle in such a way as to simulate road/wheels friction as if the vehicle was driven on a road. Depending on the test to be carried out, the rollers may be driven by the driving wheels of the vehicle or vice versa.

In particular, in order to meet the severe requirements of the European and US-Environmental Protection Agencies (EPA) with regard to the protection of the environment, the regulation of exhaust emissions of motor vehicles has become increasingly stringent. There is hence a need for chassis dynamometers, which allow to measure the exhaust emissions of a vehicle in the most realistic way possible. To comply with EPA regulations, 48" chassis dynamometers are generally used for official emission testing. These do however not simulate the actual road conditions in a sufficiently realistic way, which means that the measured exhaust emissions are not precise enough.

### Object of the Invention

The technical problem underlying the present invention is to provide a chassis dynamometer, which allows to more realistically simulate the actual road conditions. This problem is solved by a chassis dynamometer as claimed in claim 1.

### Summary of the Invention

According to the present invention, a chassis dynamometer for testing a vehicle in a wind tunnel comprises a supporting frame and at least one roller assembly with at least one roller. The latter is rotatably mounted on the supporting frame for engaging at least one driving wheel of the vehicle. In accordance with an important aspect of the present invention, a road simulating moving belt extends between the wheels of the vehicle at least from the front end of the vehicle to the rear end of the vehicle. By moving the road simulating belt with a velocity similar to the simulated speed of the vehicle, the air flow under the vehicle is similar to the air flow of the vehicle as driven on the road. The road simulating moving belt hence allows to simulate the air flow under the vehicle. The air flow under the vehicle cools the exhaust pipes and thereby influences the performance of the catalytic converters and exhaust emissions. For exhaust emission testing, a good simulation of the air flow under the vehicle is hence essential. The chassis dynamometer of the present invention thus allows to measure the exhaust emissions of a vehicle in a more realistic way.

The road simulating moving belt advantageously extends beyond the front end of the vehicle and/or the rear end of the vehicle in order to avoid entry flow effects. The length of the road simulating moving belt can e.g. be about twice the length of the vehicle.

Preferably, the road simulating moving belt is made of high tensile material.

The road simulating moving belt can be coupled to the at least one roller. It follows that the road simulating moving belt has substantially the same speed as the roller. It is however preferred to couple it to a separate motor, thereby avoiding interference between the road simulating moving belt and the chassis dynamometer. Preferably, the speed of the road simulating moving belt is synchronised with that of the roller.

Furthermore, a low-pressure region can be generated under the moving belt in order to ensure that the road simulating moving belt is always flat, thereby guarantying continuity of the air stream under the vehicle.

The at least one roller assembly may comprise a single roller extending at least over the whole width of the vehicle for receiving e.g. the two front wheels of the vehicle. Preferably however, it comprises two axially spaced rollers. The space between the two rollers can then be used to accommodate the road simulating moving belt, thereby giving rise to substantial space saving of the chassis dynamometer design. More importantly, by installing the road simulating moving belt between the rollers, it is possible to arrange the road simulating moving belt so that it is entirely flush with a cover covering the pit in which the chassis dynamometer is installed. Such a configuration further improves the simulation.

Advantageously, the chassis dynamometer further includes a second roller assembly for receiving a further set of wheels. If the first roller assembly e.g. engages the front wheels of the vehicle, the second roller assembly engages the rear wheels of the vehicle, wherein the second roller assembly is advantageously coupled to the first roller assembly in order to transfer the rotation of the front wheels to the rear wheels. It will be noted that driving all wheels of the vehicle allows to reproduce the boundary conditions of airflow around the rotating wheels of a moving vehicle, which further contributes to a more realistic simulation of the actual airflow under a moving vehicle.

Preferably, at least one of the two roller assemblies is movably mounted on the supporting frame. The distance between the roller assemblies can thereby be varied so as to allow vehicles of different size to be tested on the chassis dynamometer. The moveable roller assembly can e.g. be mounted on rails.

The supporting frame is advantageously mounted on a dampening device so that the chassis dynamometer is not influenced by other machines running in its vicinity.

The present invention also proposes a method for measuring emission levels of a vehicle, wherein said vehicle is placed on a chassis dynamometer arranged in a wind tunnel; said chassis dynamometer is switched on for giving said vehicle a simulated velocity; said wind tunnel is switched on for simulating the air flow around said vehicle; and the emission levels of said vehicle are measured. According to an important aspect of the invention, before the emission levels of said vehicle are measured, a road simulating moving belt is switched on for simulating the air flow conditions under the vehicle, said road simulating moving belt extending between the wheels of said vehicle at least from the front end of said vehicle to the rear end of said vehicle.

Said vehicle is preferably immobilised on the chassis dynamometer before said chassis dynamometer is switched on.

Said road simulating moving belt is preferably switched on with the same speed as wind tunnel.

### Brief description of the drawings

The present invention will now be described, by way of example, with reference to the accompanying drawings, in which:
- FIG. 1:: is a schematic top view of a chassis dynamometer in accordance with the present invention;
- FIG. 2:: is a schematic side view of the chassis dynamometer of FIG. 1;
- FIG. 3:: is a schematic front view of the chassis dynamometer of FIG. 1; and
- FIG. 4:: is a schematic section through a wind tunnel comprising the chassis dynamometer of FIG. 1.

### Detailed description of a preferred embodiment

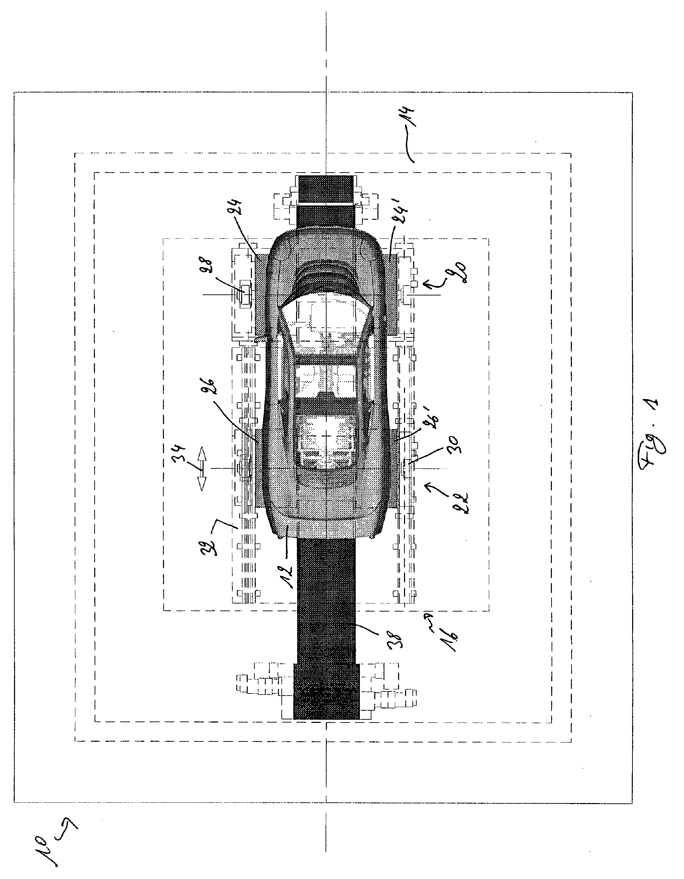

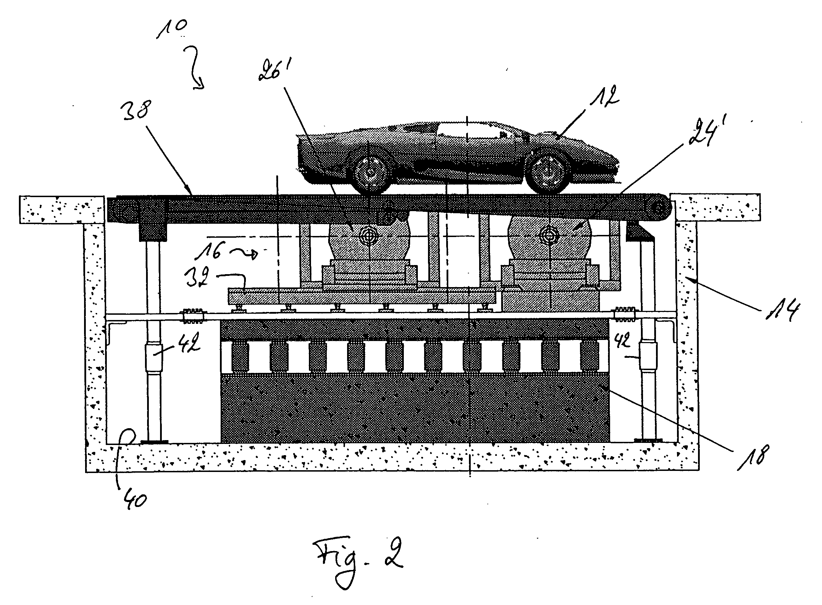

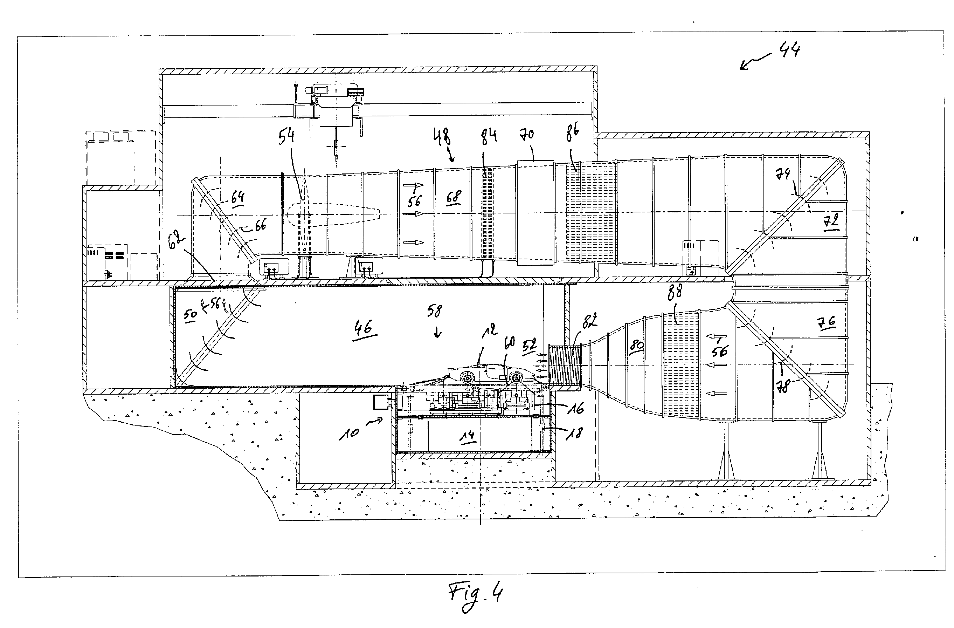

FIG. 1, 2 and 3 show a preferred embodiment of a chassis dynamometer 10, which is located in a wind tunnel (shown in Fig.4) for exhaust emission measurement of a vehicle 12. The chassis dynamometer 10 is mounted in a pit 14 and comprises a supporting frame 16 on a dampening device 18. Two roller assemblies 20 and 22 are mounted on the supporting frame 16. Each of the roller assemblies 20 resp. 22 comprises two axially spaced rollers 24 and 24' resp. 26 and 26' rotatably mounted on the supporting frame 16 via axles 28 resp. 30. The first set of rollers 24 and 24' is capable of being driven by the front wheels of the vehicle 12, whereas the second set of rollers 26' and 26' is capable of being driven by its rear wheels.

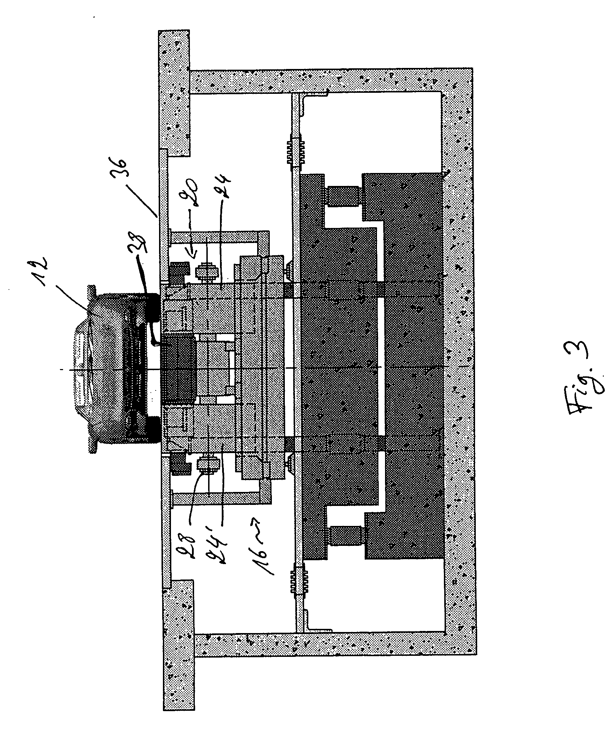

It will be noted that the rear wheel roller assembly 22 is mounted on rails 32. The distance between the roller assemblies 20 and 22 can thereby be varied as indicated by arrow 34 so as to allow vehicles of different size to be tested on the chassis dynamometer 10. A centering device (shown in Fig.4) is further associated with the vehicle 12 so as to keep the vehicle 12 stationary during the test. As shown in FIG. 3, a cover 36 is provided on the pit 14 for security reasons.

For the purpose of more realistically simulating the actual road conditions during exhaust emission measurement of a vehicle in a wind tunnel, the chassis dynamometer 10 in accordance with the invention includes a road simulating moving belt 38. The latter is e.g. supported above a base floor 40 of the pit 14 by means of pedestals 42 and extends over the whole length of the pit 14 between the rollers 24, 26 and 24', 26' so as to be entirely flush with the pit cover 36 (see FIG. 3). The road simulating moving belt 38 is coupled to a motor (not shown) for driving the moving belt 38. The speed of the moving belt is synchronised with the simulated vehicle speed, i.e. the speed of the rollers 24, 26 and 24', 26'

Moving the road simulating moving belt with a linear velocity corresponding to the simulated speed of the vehicle 12 allows to simulate in the wind tunnel that, in reality, air is channelled under the vehicle between an immobile road surface and a moving vehicle underfloor. In other words, the road simulating moving belt 38 allows a better reproduction of boundary conditions for airflow under the vehicle, thereby allowing to more realistically simulate the actual airflow under a moving vehicle 12.

A schematic section view through a wind tunnel 44 is shown in FIG.4. Such a wind tunnel 44 comprises a vehicle-testing chamber 46 and a system of channels 48 for leading air from an end portion 50 of the vehicle-testing chamber 46 to a front portion 52 of the vehicle-testing chamber 46. A rotor 54 is arranged within the system of channels 48 for creating an air stream through the system of channels 48 in direction of arrows 56.

The vehicle-testing chamber 46 comprises a test area 58 in which a vehicle 12 is installed on a chassis dynamometer 10. The latter is mounted in a pit 14 under the test area 58 and comprises a supporting frame 16 on a dampening device 18. A centering device 60 is used to immobilise the vehicle 12 on the chassis dynamometer 10.

In operation, the rotor 54 draws air from the end portion 50 of the vehicle-testing chamber 46 through an opening 62 in the roof part of the vehicle-testing chamber 46 into the system of channels 48. The drawn-in air first passes through a first bent section 64 of the system of channels 48. The first bent section 64 comprises deflectors 66 to guide the air around the bend. The air then passes through a straight section 68 comprising the rotor 54 and a humidifier 70. The straight section 68 then leads into a second bent section 72 with deflectors 74 and a third bent section 76 with deflectors 78. Finally the air passes through a tapered section 80 which opens into the front portion 52 of the vehicle-testing chamber 46 through a telescopic nozzle 82. The cross-section of the tapered section 80 tapers towards the nozzle 82, thereby concentrating the air onto the test area 58 of the vehicle-testing chamber 46, where the vehicle 12 is placed. Honeycomb vents 84, 86, 88 are installed in the system of channels 48 in order to regulate the air temperature.

In order to measure exhaust emissions of a vehicle, the latter is immobilised on the chassis dynamometer by means of centering devices. One of the standard testing cycles is inserted in the controlling software of the chassis dynamometer for giving the vehicle a simulated velocity. The wind tunnel is then switched on to simulate the wind speed around the vehicle. Finally, the road simulating moving belt is switched on with the same speed as the wind tunnel for simulating the air flow conditions under the vehicle, which cool the exhaust pipes and hence influence the performance of after-treatment systems, like e.g. catalytic converters and thereby the exhaust emissions. As the cooling of the exhaust pipes by the air flow under the vehicle is simulated and taken into account, the chassis dynamometer according to the present invention allows to obtain more precise exhaust emission measurements.

It will be noted that the chassis dynamometer in accordance with the present invention is not limited to be used for exhaust emission measurements. Indeed, such a chassis dynamometer can be used for the purpose of vehicle performance testing, vehicle fuel consumption testing and vehicle diagnostics.

Although the present description is directed towards two axle vehicles, it will be noted that it is not excluded to design a chassis dynamometer having more than two roller assemblies for vehicles having more than two axles.

## Claims

1. A chassis dynamometer (10) for testing a vehicle (12) in a wind tunnel (44), said vehicle (12) having a front end and a rear end, said chassis dynamometer (10) comprising:
a supporting frame (16);
at least one roller assembly (20, 22) with at least one roller (24, 24', 26, 26') rotatably mounted on said supporting frame (16) for engaging at least one driving wheel of said vehicle (12);
**characterised by**
a road simulating moving belt (38) extending between the wheels of said vehicle (12) at least from the front end of said vehicle to the rear end of said vehicle.

2. 'The chassis dynamometer as claimed in claim 1, **characterised in that** said road simulating moving belt (38) extends beyond said front end of said vehicle (12).

3. The chassis dynamometer as claimed in claim 1 or 2, **characterised in that** said road simulating moving belt (38) extends beyond said rear end of said vehicle (12).

4. The chassis dynamometer as claimed in any one of claims 1 to 3, **characterised in that** said road simulating moving belt (36) is made of high tensile material.

5. The chassis dynamometer as claimed in any one of claims 1 to 4, **characterised in that** said road simulating moving belt (36) is coupled to said at least one roller (24, 24', 26, 26').

6. The chassis dynamometer as claimed in any one of claims 1 to 4, **characterised in that** said road simulating moving belt (38) is coupled to a motor.

7. The chassis dynamometer as claimed in claim 6, **characterised in that** the speed of the road simulating moving belt is synchronised with that of the roller.

8. The chassis dynamometer as claimed in any one of claims 1 to 7, **characterised by** a low-pressure region under said road simulating moving belt.

9. The chassis dynamometer as claimed in any one of claims 1 to 8, **characterised in that** said at least one roller assembly (20, 22) comprises a roller extending at least over the whole width of said vehicle (12).

10. The chassis dynamometer as claimed in any one of claims 1 to 8, **characterised in that** said at least one roller assembly (20, 22) comprises two axially spaced rollers (24, 24', 26, 26').

11. The chassis dynamometer as claimed in any one of claims 1 to 10, **characterised by** a second roller assembly (20, 22) mounted on said supporting frame (16).

12. The chassis dynamometer as claimed in claim 11, **characterised in that** said second roller assembly is coupled to said first roller assembly in order to transfer the rotation of the front wheels to the rear wheels.

13. The chassis dynamometer as claimed in claim 11 or 12, **characterised in that** at least one of said roller assemblies (20, 22) is movably mounted on said supporting frame (16).

14. Method for measuring emission levels of a vehicle, wherein
(a) said vehicle is placed on a chassis dynamometer arranged in a wind tunnel;
(b) said chassis dynamometer is switched on for giving said vehicle a simulated velocity;
(c) said wind tunnel is switched on for simulating the air flow around said vehicle;
(d) the emission levels of said vehicle are measured;
**characterised in that**
(e) before step (d), a road simulating moving belt is switched on for simulating the air flow conditions under the vehicle, said road simulating moving belt extending between the wheels of said vehicle at least from the front end of said vehicle to the rear end of said vehicle.

15. Method according to claim 14, wherein said vehicle is immobilised on the chassis dynamometer before said chassis dynamometer is switched on.

16. Method according to claim 14 or 15, wherein said road simulating moving belt is switched on with the same speed as wind tunnel.
